# EUROPÄISCHE PATENTSCHRIFT

(11) **EP 2 508 495 B1**
(45) Veröffentlichungstag und Bekanntmachung des Hinweises auf die Patenterteilung: **07.08.2019**
(21) Anmeldenummer: 12172257.3
(22) Anmeldetag: 05.09.2008
(51) Int. Cl.: C04B 7/52, C04B 28/04, C09K 8/46

(54) **Verfahren zur Abdichtung oder Verfestigung von porösen Formkörpern, Gesteinen oder porösen Formationen unter Verwendung von hyperfeinem Zement**
Method for sealing or fixing porous bodies, stones or porous formations with extremely fine cement
Procédé d'étanchéification ou de fixation de corps de formage poreux, de roches ou de formations poreuses dotés de ciment ultra-fin

(30) Priorität: 05.09.2007 DE 102007042078
(43) Veröffentlichungstag der Anmeldung: 10.10.2012
(62) Teilanmeldung aus: 08803760.1
(73) Patentinhaber: EPG (Engineered nanoProducts Germany) AG, 64347 Griesheim (DE)
(72) Erfinder: Genolet, Louis, 66111 Saarbrücken (DE); Schmidt, Helmut, 66130 Saarbrücken-Güdingen (DE)
(74) Vertreter: Held, Stephan

(56) Entgegenhaltungen:
- EP-A- 0 941 975
- EP-A- 1 004 557
- EP-A- 1 236 701
- WO-A-90/14322
- DE-A1- 3 627 283
- US-A- 5 086 850
- US-A- 5 776 244
- BATH F.: "Planeten-Kugelmühlen für die Herstellung von Nanopartikeln", CHEMIE INGENIEUR TECHNIK, Bd. 77, Nr. 9, 2005, XP002511134, Wiley-VCH Verlag GmbH&Co. KG, Weinheim

## Beschreibung

Die vorliegende Erfindung betrifft ein Verfahren zur Abdichtung oder Verfestigung von porösen Formkörpern, Gesteinen oder porösen Formationen gemäß Anspruch 1.

Zemente, wie Portland-Zemente, werden üblicherweise über einen Brenn-Prozess aus natürlichen Rohstoffen hergestellt. Dabei entstehen sogenannte Klinker. Durch Aufmahlen der Klinker über ein Trockenmahlverfahren entsteht ein feines Pulver, der sogenannte Zement. Klinker müssen trocken vermahlen werden, da der entstehende Zement sonst abbindet und unbrauchbar wird. Zemente sind hydraulisch. Das heißt sie binden mit Wasser zu einem kompakten Formkörper ab; dabei entsteht aus dem wichtigen Baustein der Klinker, dem sogenannten Monocalciumsilicat Tricalciumsilicat, das in feinen Nadeln kristallisiert, die sich innig verfilzen und so die Festigkeit des Zementsteins bewirken.

Zementmörtel sind wässrige Anmischungen des gemahlenen Zements mit Sand. Betone sind wässrige Anmischungen des gemahlenen Zements mit gröberem Kies.

Die Partikelgröße der gemahlenen Klinker liegt üblicherweise im Bereich oberhalb von 10 µm. Da die Partikelgröße relativ uneinheitlich ist, werden in der Regel die Prozentzahlen genannt, die unterhalb einer gewissen Größe liegen. Ein Maß für die Feinheit, das sich in der Zementindustrie eingebürgert hat, ist der sogenannte Blaine-Wert. Dabei wird eine bestimmte Luftmenge durch ein genormtes Bett aus gemahlenem Zement gepumpt und die Zeit gemessen, die dafür benötigt wird. Je feiner das Korn ist, umso größer ist die dazu benötigte Zeit. Ein anderer Wert ist der sogenannte D₅₀-Wert. Er gibt an, wie viel Gewichtsprozent der Körnung unterhalb eines angegebenen Durchmessers liegt. Je feiner die Klinker gemahlen werden, umso höher wird in der Regel die Festigkeit des Mörtels oder des Betons.

Esentiell beim Mahlen von Zement ist, dass er trocken, d.h. in Abwesenheit von Wasser gemahlen werden muss. Trockenmahlprozesse sind in der damit erreichbaren Partikelgröße nach unten deutlich begrenzt, da im Trockenen die Rekombinationsgeschwindigkeit der Partikel deutlich höher als zum Beispiel bei wässrigen Nassmahlverfahren ist, da an den auseinandergebrochenen Grenzflächen Ladungen entstehen, die die Partikel rasch wieder verbinden.

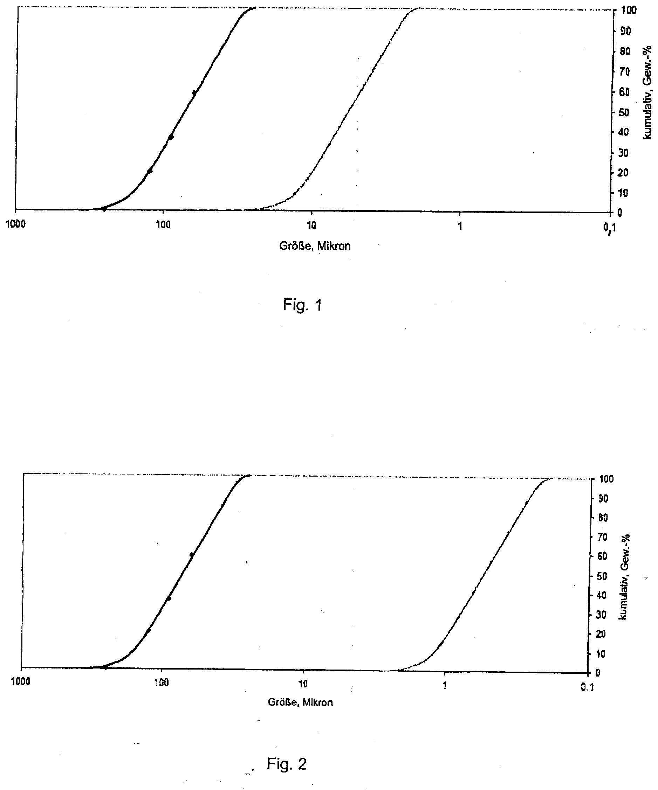

Handelsüblicher Portlandzement besitzt eine mittlere Teilchengrößenverteilung mit einem D₅₀-Wert in der Größenordnung von 70 µm. Zemente mit einem D₅₀-Wert von 10 µm oder etwas darunter werden als ultrafeine Zemente bezeichnet, handelsübliche ultrafeine Zemente weisen einen D₅₀-Wert im Bereich von 3 bis 8 µm auf, siehe Figur 1. Sie werden aus normalen Zementen durch Abtrennen der gröberen Fraktionen durch verschiedene Trennverfahren erhalten.

Ultrafeine Zemente werden insbesondere als Zuschläge zu gröberen Mischungen im Bereich der Erdöl- und Erdgasindustrie eingesetzt. So gewinnt in den letzten Jahren z.B. Mörtel auf Basis von ultrafeinem Zement bei Fels- und Bodeneinspritzungen zur Verfestigung oder Abdichtung immer mehr an Bedeutung. Hinsichtlich der Verwendung von ultrafeinen Zementen in der Öl- und Gasindustrie sollten diese Sorten ein ausgezeichnetes Penetrationsvermögen und eine ausgezeichnete Festigkeit und Haltbarkeit aufweisen, damit sie für die Druckzementierung von Ölquellen-Matrices bzw. -Formationen, insbesondere für die Gas- und Wasserkontrolle (GOR (Gas-Öl-Verhältnis) und WOR (Wasser-ÖI-Verhältnis)), verwendet werden können.

Zur Herstellung von ultrafeinen Zementen ist eine Trockenvermahlung üblich, da dies einfach und schnell durchgeführt werden kann, aber sie erfordert eine sorgfältige Anpassung der Mahlbedingungen an die jeweilige Probe. Neben Trockenmahlverfahren sind auch Nassmahlverfahren unter Verwendung von Wasser bekannt, wie z.B. von Naudts, A., Landry E. "New On-site Wet Milling for the preparation of Ultrafine Cement-based Grouts", 3rd International Speciality Conference on Grouting and Ground Treatment, 10-12. Feb. 2003, New Orleans, Louisiana, USA, beschrieben. Ein solches Nassmahlen mit Wasser ist aber nur möglich, wenn der ultrafeine Zement vor Ort in situ unmittelbar vor der Einspritzung oder Behandlung hergestellt wird, bevor er hart wird.

Andere Herstellungsverfahren für ultrafeinen Zement sind ein Verfahren, bei dem ultrafeine Additive mit feineren Teilchen in den Zement gegeben werden (Clarke, B., "Performance characteristics of microfine cement", ASCE preprint 84-023, Atlanta, Georgia, American Society of Civil Engineers, New York) und ein Verfahren, bei dem feine Nebenprodukte aus den normalen Zementherstellungsstufen gesammelt werden (US-A-5417760). Als Additive, die einige Mischungseigenschaften verbessern und den Blaine-Wert des Zements verringern, werden von Naudts, A., Landry E., Hooey, S., Naudts, W., "Additives and Admixtures in Cement-based Grouts", 3rd International Speciality Conference on Grouting and Ground Treatment, 10-12. Feb. 2003, New Orleans, Louisiana, USA, Schlacke, Feinsilica und Flugasche genannt.

Ultrafeine Zemente dienen zur Verfestigung oder Abdichtung von lockerem bzw. porösem Gestein, wobei auch eine Penetration des mit Wasser angerührten Zements in kleinere Poren erzielt werden soll. Da aber viele Gesteine Poren im unteren Mikrometer-Bereich oder sogar unterhalb 1 µm aufweisen, ist das Verfahren in solchen Fällen nicht einsetzbar und daher insgesamt sehr limitiert. Besonders bei der Ausbeutung von Erdgaslagerstätten ist dies gravierend, da Gas sehr einfach auch durch sehr feine Poren aus dem Gestein entweichen kann und damit in vielen Erdgasquellen sehr hohe Verluste auftreten.

EP 1236701 A1 beschreibt eine Zementaufschlämmung mit einer niedrigen Dichte zwischen 750 und 1000 kg/m³, wobei die feste Fraktion davon 75 bis 90 Vol.-% leichter Teilchen mit einer mittleren Teilchengröße zwischen 10 und 60 µm und 10 bis 25 Vol.-% Portlandzement mit einer mittleren Teilchengröße von 10 bis 50 µm oder Mikrozement mit einer mittleren Teilchengröße von 0,5 bis 5 µm umfasst.

WO 90/14322 A betrifft ein Verfahren zur Herstellung von Zementmischungen zur Injektion in feinkörnigen Erden oder mikroporösem Gestein, wobei das Verfahren die Nassmahlung von Zement in wässriger Suspension umfasst.

US 5086850 A beschreibt ein Verfahren bei dem eine ultrafeine Zementaufschlämmung durch ein Bohrloch auf den Boden oder einen anderen Ort gepumpt wird, wobei es am meisten bevorzugt ist, dass 50% der Zementteilchen einen Durchmesser von etwa 4 Mikron aufweisen.

EP 1004557 A betrifft eine Injektions-Bindemittelzusammensetzung, die zum Abdichten oder Verfestigen von Böden oder Fels geeignet ist und ein hydraulisch gemahlenes sulfatträgerfreies Feinstbindemittel, einen Erstarrungsverzögerer, ein Fließmittel und ein mikrobielles Polysaccharid als Stabilisator umfasst. Als Bindemittel werden Feinst-Klinkermehle mit einem d₉₅-Wert < 6,5 µm genannt.

EP 0941975 A beschreibt einen Injektionszement auf Basis von Mikrozement, der mindestens einen Korrosionsinhibitor enthält, der eine Amino- und/oder Hydroxyaminoverbindung umfasst. Für den Mikrozement wird eine typische Korngrößenverteilung angegeben, wonach 25% kleiner als 2 µm und 32% kleiner als 4 µm sind.

US 5776244 A betrifft eine ultrafeine Zement-Mörtelzusammensetzung, die aus etwa 40 bis 50 Gew.-% Portland-Zement, 50 bis 60 Gew.-% Bimsstein und 0,1 bis 1,5 Gew.-% Superweichmacher besteht, wobei die mittlere Teilchengröße der Teilchen kleiner 2,5 µm beträgt.

Die Aufgabe bestand nun darin, ein Verfahren zur Abdichtung oder Verfestigung von porösen Formkörpern, Gesteinen oder porösen Formationen bereitzustellen, mit dem auch sehr feine Poren von Gesteinen so abgedichtet werden können, das selbst Erdgas unter Druck nicht entweichen kann. Es sollte insbesondere ein Zement bereitgestellt werden, der auch in sehr feine Poren von Gesteinen eingepumpt werden kann und dort aushärtet.

Die Aufgabe konnte überraschenderweise durch ein Verfahren gemäß Anspruch 1 gelöst werden, das die Nassvermahlung von Zement oder Zementklinker in einem nichtwässrigen Lösungsmittel umfasst. Da der nach Nassvermahlung erhaltene Zement mit einem D₅₀-Wert unter 1 Mikrometer auch in sehr feine Poren eindringen kann, ist er für die Abdichtung von Gesteinen, insbesondere bei Erdgasquellen von außerordentlich hoher Bedeutung. Im folgenden wird die Erfindung ausführlich beschrieben.

Figur 1 zeigt die Teilchengrößenverteilung von einem herkömmlichen Portlandzement (fette Linie, Typ EN 197-1 I CEM II/B-S 32.5 R) und einem handelsüblichen ultrafeinen Zement (feine Linie). Figur 2 zeigt die Teilchengrößenverteilung des gemäß Beispiel 1 hergestellten hyperfeinen Zements (feine Linie) im Vergleich zum Portlandzement von Figur 1, der als Ausgangsmaterial verwendet wurde.

Die Teilchengröße wird hier in dieser Beschreibung als D₅₀-Wert (Teilchengröße D₅₀) angegeben. Diese Größenangabe ist auf dem Zementgebiet üblich. Die Teilchengröße D₅₀ gibt an, wie viel Gewichtsprozent der Probe aus Teilchen mit einer Größe unterhalb eines angegebenen Durchmessers bestehen. Eine Teilchengröße D₅₀ kleiner 1 µm bedeutet also, dass 50 Gew.-% der Probe aus Teilchen mit einem Durchmesser kleiner 1 µm bestehen. Entsprechend gibt ein D₉₅-Wert an, dass 95 Gew.-% der Probe eine Teilchengröße unter der angegebenen Länge aufweisen.

Je nach Teilchengröße wird hierfür die Teilchengrößenverteilung durch verschiedene Messverfahren bestimmt: bis zu 20 bis 40 µm: Siebanalysen; unter 10 µm: optische Zählverfahren, elektrische Zählverfahren, Sedimentationstechniken; unter 1 µm: Laserbeugungsverfahren. Bei den ultrafeinen Zementen der Erfindung, wie die in den Beispielen erhaltenen, kann der D₅₀-Wert durch optische Vermessung unter dem Mikroskop ermittelt werden, die Bestimmung durch Laserbeugung ist aber präziser.

Als zu vermahlendes Zementausgangsmaterial kann jeder handelsübliche Zement oder Zementklinker eingesetzt werden, wobei der Einsatz von Zement bevorzugt ist. Es können alle bekannten Zementklinker- und Zementsorten verwendet werden, z.B. und ohne Beschränkung Portlandzementklinker, Portlandzement, Hüttenzement, Puzzolanzement, Tonerdezement, Asbestzement und Quellzement, wobei Portland-zemente bevorzugt sind. Es kann zweckmäßig sein, einen Zement mit einer relativ kleinen Teilchengröße als Ausgangsmaterial einzusetzen, z.B. um den erforderlichen Energieeintrag für die erfindungsgemäße Hyperfeinzermahlung zu minimieren, es ist aber genauso möglich, mit grobkörnigeren Zementsorten oder Zementklinker zu beginnen. Bei Einsatz von Zementklinker ist im allgemeinen ein mehrstufiger Prozess mit Grob- und Feinzerkleinerung sinnvoll, wobei die grobe Zerkleinerung auch durch trockenes Vermahlen erfolgen kann.

Die Erfindung beruht auf der überraschenden Feststellung, dass üblicher Zement, bevorzugt Portland-Zement, in flüssiger Phase zu deutlich kleineren Korngrößen vermahlen werden kann als dies im Trockenen möglich ist. Dies gelang jedoch nicht in wässrigen Phasen, sondern in nichtwässrigen Lösungsmitteln. Dementsprechend umfasst das Verfahren der Erfindung als ersten Schritt die Nassvermahlung von Zement oder Zementklinker in einem nichtwässrigen Lösungsmittel.

Als Lösungsmittel können praktisch alle gängigen organischen Lösungsmittel oder Mischungen von zwei oder mehr organischen Lösungsmitteln eingesetzt werden. Das Lösungsmittel sollte weitgehend frei von Wasser sein bzw. einen sehr niedrigen Wassergehalt aufweisen. Je nach Lösungsmittel ist es oft üblich, dass kleine Mengen Wasser etwa als Verunreinigung enthalten sind, was in der Regel für das Verfahren nicht störend ist, so dass aufwendige Aufreinigungsverfahren nicht erforderlich sind. Der Wassergehalt des Lösungsmittels sollte 10 Gew.-%, bevorzugt 5 Gew.-% nicht übersteigen, z.B. kann er im Bereich von 5 bis 1 Gew.-% oder 2,5 bis 1 Gew.-% liegen, ohne das Verfahren zu beeinträchtigen. Lösungsmittel mit weniger als 1 Gew.-% Wasser oder ganz ohne Wasser sind natürlich zumindest genauso geeignet. Beispiele für einsetzbare Lösungsmittel sind aliphatische und alicyclische Kohlenwasserstoffe, wie Pentan, Hexan und Cyclohexan, Aromaten, wie Toluol, halogenierte Kohlenwasserstoffe, wie Methylenchlorid, Chloroform, Tetrachlorkohlenstoff und Ethylenchlorid, Alkohole, wie Methanol, Ethanol, n-Propanol, Isopropanol, Butanole, Hexanole und Cyclohexanol, Ketone, wie Aceton und Butanon, Ester, wie Ethylacetat und Butylacetat, lineare und cyclische Ether, wie Diethylether, Dibutylether, Dioxan und Tetrahydrofuran, Amide und andere Stickstoffverbindungen, wie Acetonitril, Dimethylformamid und Pyridin. Bevorzugt ist der Einsatz polarer Lösungsmittel, insbesondere von Alkoholen, wobei Isopropanol besonders bevorzugt ist.

Bevorzugt werden zu der zu vermahlenden Mischung aus Zementklinker oder Zement und nichtwässrigem Lösungsmittel zusätzlich ein oder mehrere sogenannte Mahlhilfsmittel zugegeben. Durch die Anwesenheit eines Mahlhilfsmittels beim Mahlvorgang kann die Zerkleinerung der Zementteilchen zusätzlich verbessert werden, z.B. indem ein geringerer Energieeintrag erforderlich ist, die Dauer des Mahlvorgangs verkürzt werden kann und/oder noch kleinere Teilchengrößen möglich sind. Der Einsatz von Mahlhilfsmittel ist in der Zementindustrie bekannt und es können alle für die Vermahlung von Zement bekannten Mahlhilfsmittel eingesetzt werden. Solche sind z.B. in Zementhandbüchern aufgelistet.

Als besonders vorteilhaft hat sich die Verwendung von Triethanolamin erwiesen. Triethanolamin ist in polaren Lösungsmitteln wie Alkoholen löslich. Das Mahlhilfsmittel ist vorzugsweise in dem eingesetzten organische Lösungsmittel löslich.

Mahlhilfsmittel sind in der Regel polare Moleküle, die gegebenenfalls ionischen Charakter aufweisen. Ohne sich an eine Theorie binden zu wollen, wird davon ausgegangen, dass diese Mahlhilfsmittel sich beim Auseinanderbrechen eines Partikels rasch an die geladenen Oberflächen anlagern und damit die Rekombination verhindern. Im Trockenen ist eine Diffusion der Moleküle der Mahlhilfsmittel an die jeweiligen aufgebrochenen Flächen sehr schwierig. Daher ist der Effekt von Mahlhilfsmitteln im Trockenen begrenzt; dies kann man an den Grenzen beim Vermahlen der Klinker im Trockenen unschwer erkennen. In den erfindungsgemäß eingesetzten organischen Lösungsmitteln dagegen kann sich die Wirkung der Mahlhilfsmittel besonders gut entfalten.

Beispiele für Mahlhilfsmittel, die in der Zementindustrie eingesetzt werden, sind Glycole, wie Ethylenglycol und Propylenglycol, Amine und deren Salze, z.B. Triethanolamin und dessen Salze, Alkohole, Hydroxycarbonsäuren, Ligninsulfonate, Fettsäuren und deren Salze, und auch Trockenseife/Detergens als Schmiermittel und Graphit als Antistatikmittel und Schmiermittel, wobei Triethanolamin besonders bevorzugt ist. Eine besonders zweckmäßige Kombination ist daher Isopropanol als Lösungsmittel und Triethanolamin als Mahlhilfsmittel.

Die eingesetzten Mischungsverhältnisse der 3 Komponenten in der Mischung können in weiten Bereichen variieren und hängen u.a. auch von den konkreten Verbindungen und den eingesetzten Mahlbedingungen ab. Wenn Mahlhilfsmittel eingesetzt wird, kann das Gewichtsverhältnis von Mahlshilfsmittel zu Zement im allgemeinen z.B. im Bereich von 0,01 bis 1,5, bevorzugt im Bereich von 0,1 bis 0,2 liegen. Auch das Gewichtsverhältnis von Lösungsmittel zu Zement kann in weiten Bereichen variieren. Eine Menge an Lösungsmittel, die die Nassvermahlung ermöglicht reicht aus, die Menge an Lösungsmittel kann aber nahezu beliebig erhöht werden. Das Gewichtsverhältnis von Lösungsmittel zu Zement kann z.B. zweckmäßigerweise im Bereich von 0,05 bis 5 und bevorzugt im Bereich von 0,3 bis 1,0 liegen.

Für den Vermahlungsprozess können übliche Aggregate bzw. Zerkleinerungsmaschinen, mit denen Pulver in einem Nassmahlprozess vermahlen werden können, verwendet werden. Beispiele sind Mühlen mit losen Mahlwerkzeugen wie Kugeln, Stäben oder Zylindern, z.B. Kugel- Stab-, Planeten- und Schwingmühlen, Homogenisatoren, Turborührer, Rotationskugelmühlen, Rührwerksmühlen, Walzenstühle und Kolloidmühlen, wie Scheibenmühlen. Bevorzugt sind Kugelmühlen, wobei die Kugeln z.B. eine Größe im Bereich von 1 bis 50 mm aufweisen können. Die Kugeln können z.B. aus Zirconiumdioxid sein. Es können aber natürlich auch Mahlwerkzeuge mit einer anderen Form eingesetzt werden. Auch Rotationskugelmühlen mit Rotor unter Stator sind geeignet.

So war es zum Beispiel möglich, in einer Kugelmühle der Firma Retsch in Isopropanol mit Triethanolamin als Mahlhilfsmittel innerhalb von 120 Minuten einen üblichen Portlandzement auf einen D₅₀-Wert von deutlich unter einem Mikrometer herunterzumahlen.

Nach dem Nassvermahlen wird eine Paste, Dispersion oder Aufschlämmung von hyperfeinem Zement mit einer Teilchengröße D₅₀ kleiner 1 µm in dem nichtwässrigen Lösungsmittel erhalten. Sofern ein Mahlhilfsmittel eingesetzt wurde, ist es ebenfalls in der Paste, Dispersion oder Aufschlämmung enthalten. Sofern es in dem Lösungsmittel löslich ist, kann es relativ einfach zumindest teilweise vom erhaltenen hyperfeinen Zement abgetrennt werden, sofern dies gewünscht wird.

In der Regel wird das Lösungsmittel und, falls eingesetzt, gegebenenfalls auch das Mahlhilfsmittel nach dem Mahlvorgang zumindest teilweise wieder abgetrennt. Das Lösungsmittel wird gewöhnlich vollständig entfernt, um ein trockenes Pulver zu erhalten. Dies kann durch jedes übliche bekannte Abtrennverfahren erfolgen, z.B. durch Filtrieren, Zentrifugieren, Dekantieren oder Abdestillieren. Falls noch im Zement zurückgebliebenes Mahlhilfsmittel weiter entfernt werden soll, kann dies mithilfe einer Wäsche erfolgen, z.B. mit dem beim Mahlvorgang verwendeten Lösungsmittel oder auch mit einem anderen organischen Lösungsmittel. Nach Bedarf kann aber auch so gearbeitet werden, dass Mahlhilfsmittel im Zement verbleibt.

Je nach Abtrennverfahren kann zunächst ein noch feuchter hyperfeiner Zement erhalten werden, z.B. beim Filtrieren oder Dekantieren. Ein solcher noch feuchter Zement kann durch Trocknen, gegebenenfalls unter Erwärmen, in ein trockenes rieselfähiges Pulver überführt werden. Der erhaltene hyperfeine Zement weist eine Teilchengröße, bestimmt als D₅₀-Wert, von weniger als 1 µm auf. So erhält man z.B. nach dem Filtrieren mit einem Filter mit entsprechend kleiner Porengröße, gegebenenfalls nach Auswaschen mit Lösungsmittel wie Isopropanol ein trockenes Zementpulver gemäß der Erfindung.

Der nach der Nassvermahlung erhaltene hyperfeine Zement mit einem D₅₀-Durchmesser unter 1 µm reagiert mit Wasser außerordentlich rasch zu einem festen Formkörper.

Dem hyperfeinen Zement können je nach Bedarf übliche Additive zugesetzt werden, wie z.B. Beschleuniger, Verzögerer und diffusionshemmende Additive (Diffusionsblocker). Diese sind in der Zementindustrie bekannt und werden je nach den gewünschten Eigenschaften des Zements verwendet.

Hinsichtlich Beispielen für solche einsetzbaren Additive wird auf Handbücher der Zement-Technologie verwiesen. Beispiele für in der Zementindustrie übliche Verzögerer sind Saccharose, Phosphonsäurederivate (PBTC) oder Tetrakaliumpyrophosphat. Beispiele für in der Zementindustrie übliche Diffusionsblocker sind lösliche Silicate und Silicofluoride, gemahlene Schlacke, Bimsstein, Diatomit, Flugasche, Silicastaub, Stearin-, Capryl- und Ölsäuren oder deren Natrium-, Ammonium-, Sulfonium- und Aluminiumsalze. Natürlich kann der Zement auch mit Sand vermischt als Mörtel verwendet werden.

Die Abbindezeit lässt sich mit in der Zementindustrie üblichen Verzögerern im Rahmen der in der Zementindustrie üblichen Grenzen einstellen. Um eine zusätzlich verbesserte Abdichtung zu erreichen, können dem Zement der Erfindung auch sogenannte Diffusionsblocker zugesetzt werden, wie sie zum Beispiel bei der Herstellung von wasserdichten Betonen (Sperrbeton) in der Zementindustrie üblicherweise eingesetzt werden. Solche Diffusionsblocker sind z.B. in Handbüchern der Zementindustrie aufgelistet. Diese Additive sind im Handel erhältlich und werden in der Bauindustrie immer dort eingesetzt, wo z.B. wasserdichte Decken, Wände oder Böden hergestellt werden müssen.

Der hyperfeine Zement kann in trockener Form mit Wasser zu einem Brei, vorzugsweise einen niedrigviskosen Brei, angerührt werden. Nach dem Anrühren können mit dem Brei sehr feine Poren auch unterhalb 1 µm verfüllt werden. Damit ist es möglich, gasdichte Abdichtungen von porösen Formkörpern, Gesteinen oder Formationen zu erzielen. In einer bevorzugten Ausführungsform werden dem Zement der Erfindung übliche Diffusionsblocker zugesetzt. Mit dieser Kombination ist es möglich, vollkommen gasdichte Abdichtungen in porösen Gesteinen zu erzielen.

Der hyperfeine Zement kann für jede Anwendung eingesetzt werden, für die auch herkömmliche Zemente eingesetzt werden. Der hyperfeine Zement eignet sich insbesondere zur Abdichtung oder Verfestigung von porösen Formkörpern, Gesteinen oder porösen Formationen, bevorzugt für Erdölfelder und besonders bevorzugt für Erdgasfelder.

Die porösen Formkörper können z.B. aus Sand, Kies, Metall, Kunststoff oder Keramik sein. Poröse Formationen beinhalten geologische Formationen wie Felsen oder Böden, wobei es sich bei den porösen Formkörpern, Formationen oder Gesteinen auch um lose Gefüge von diskreten Komponenten, wie Sandteilchen oder Steinen, handeln kann, bei denen die Zwischenräume zwischen den diskreten Komponenten die Poren oder Kanäle bilden. Der poröse Formkörper kann somit auch aus einem noch nicht verfestigtem Pulver bestehen. Beispiele für poröse Formationen sind Böden und Formationen aus Sand, Erde oder Sandstein und andere mineralische Formationen, insbesondere alle Arten von Felsen bzw. Gestein.

Die Abdichtung oder Verfestigung von porösen Formkörpern, Gesteinen oder porösen Formationen wird bevorzugt so durchgeführt, dass man eine Mischung aus dem hyperfeinen Zement und Wasser zubereitet, wobei nach Bedarf Additive, wie Verzögerer und Diffusionsblocker, und Sand zugesetzt werden können, und den erhaltenen Brei in die porösen Formkörper, Gesteine oder Formationen einpumpt oder infiltriert, was gegebenenfalls durch Druckanwendung unterstützt werden kann. Der in die Poren oder Kanäle der Formkörper, Gesteine oder Formationen eingedrungene Zementbrei erstarrt nach einer gewissen Zeit und sorgt so für die gewünschte Abdichtung oder Verfestigung.

Der hyperfeine Zement eignet sich auch als Zusatz für Polymere oder Bauteile aus gepressten Textilien oder Naturfasern, um den Brandschutz dieser Materialien zu verbessern.

Weitere konkrete Anwendungen des hyperfeinen Zements bzw. von einem daraus hergestellten Zementbrei, Mörtel oder Beton, gegebenenfalls unter Zusatz der vorgenannten Additive, sind z.B. die Reparatur von geschädigtem Mauerwerk durch Einpressen, die Bildung von faserverstärkten Zementbauteilen durch Infiltration, die Verfestigung von losem Erdreich, die Verfestigung von Bauputz, Bauwerken und Wänden, die Abdichtung oder Sanierung von Mauerwerk, die Restaurierung von Gebäuden, die Herstellung von Bauteilen durch Infiltration von Pulver, z.B. aus Sand, Kies, Polymeren, Metall oder Mischungen davon, und das Abdichten von Deponien.

### Beispiele

### Referenzbeispiel 1

40 g Portland-Zement wurden mit 6 g Triethanolamin als Mahlhilfsmittel gemischt. Dann wurde die Mischung in 15 g Isopropanol, analysenrein, als Mahlfluidmedium dispergiert (Nassmahlverfahren). Die Gewichtsverhältnisse der Komponenten waren wie folgt: Zement: 65,57%, Triethanolamin: 9,84%, Isopropanol: 24,59%. Die Mischung wurde in eine Kugelmühle Retsch Cup Mill mit Zirconiumdioxid-Kugeln gegeben und 2 h bei 500 U/min, alternierende Zyklen, mit den folgenden Mahlbedingungen gemahlen:

| | |
|---|---|
| Menge Mahlwerkzeug (Kugeln): | 120 g (entspricht 3 g/g Zement) |
| Größe Mahlwerkzeug (Kugeln): | 3 mm |
| Mahlgeschwindigkeit (110 bis 600 U/min): | 500 U/min |
| Mahlzeit: | 120 min |

Nach Beendigung des Mahlzyklus wurden die Kugeln durch Nasssieben unter Verwendung von Isopropanol, analysenrein, abgetrennt. Der erhaltene hyperfeine Zement wurde durch Verdampfung des Alkohols getrocknet. Die Teilchengrößenverteilung und der D₅₀-Wert des hyperfeinen Zements sind in Figur 2 gezeigt.

### Referenzbeispiel 2

Es wurde wie in Beispiel 1 gearbeitet, außer dass statt 3 g Mahlwerkzeug/g Zement 1,5 g Mahlwerkzeug/g Zement und statt Kugeln einer Größe von 3 mm Kugeln verschiedener Größen (2 Kugeln von 20 mm, 10 Kugeln von 10 mm, 150 g Kugeln von 3 mm) verwendet wurden.

Die Teilchengrößenverteilung des erhaltenen hyperfeinen Zements war wie in Beispiel 1. Der Einsatz einer Kombination verschiedener Größen für das Mahlwerkzeug ermöglicht somit die gleichen Ergebnisse bezüglich der Teilchengrößenverteilung bei einem geringeren Gewichtsverhältnis von Zement zu Mahlwerkzeug.

## Patentansprüche

1. Verfahren zur Abdichtung oder Verfestigung von porösen Formkörpern, Gesteinen oder porösen Formationen, umfassend
die Nassvermahlung von Zement oder Zementklinker in einem nichtwässrigen Lösungsmittel, um einen hyperfeinen Zement mit einer Teilchengröße D₅₀ < 1 µm herzustellen, und
das Einpumpen oder Infiltrieren eines Breis aus dem Zement und Wasser in die porösen Formkörper, Gesteine oder Formationen.

2. Verfahren nach Anspruch 1, **dadurch gekennzeichnet, dass** die Abdichtung oder Verfestigung in Erdöl- oder Erdgasfeldern, insbesondere in porösem Gestein in Erdgaslagerstätten erfolgt.

3. Verfahren nach einem der Ansprüche 1 bis 2, **dadurch gekennzeichnet, dass** der hyperfeine Zement zusätzlich mindestens ein Zementadditiv ausgewählt aus einem Verzögerer und einem Diffusionsblocker umfasst.

4. Verfahren nach einem der Ansprüche 1 bis 3, **dadurch gekennzeichnet, dass** der Zement oder Zementklinker in Anwesenheit eines Mahlhilfsmittels vermahlen wird.

5. Verfahren nach einem der Ansprüche 1 bis 4, **dadurch gekennzeichnet, dass** nichtwässriges Lösungsmittel und gegebenenfalls Mahlhilfsmittel vom nach dem Mahlen erhaltenen hyperfeinen Zement zumindest teilweise abgetrennt werden.

6. Verfahren nach einem der Ansprüche 1 bis 5, **dadurch gekennzeichnet, dass** feuchter hyperfeiner Zement, der nach Vermahlen und gegebenenfalls teilweisem Abtrennen der anderen Komponenten zurückbleibt, zu einem rieselfähigen Pulver getrocknet wird.

7. Verfahren nach einem der Ansprüche 1 bis 6, **dadurch gekennzeichnet, dass** der Zement in einer Kugelmühle oder Rotationskugelmühle vermahlen wird.

8. Verfahren nach einem der Ansprüche 1 bis 7, **dadurch gekennzeichnet, dass** als nichtwässriges Lösungsmittel Isopropanol verwendet wird.

9. Verfahren nach einem der Ansprüche 1 bis 8, **dadurch gekennzeichnet, dass** als Mahlhilfsmittel Triethanolamin verwendet wird.

10. Verfahren nach einem der Ansprüche 1 bis 9, **dadurch gekennzeichnet, dass** der erhaltene hyperfeine Zement in trockener Form mit Wasser zu einem niedrigviskosen Brei angerührt wird.

11. Verfahren nach einem der Ansprüche 1 bis 10, **dadurch gekennzeichnet, dass** der Zement Portland-Zement ist.

## Claims

1. A process for sealing or strengthening porous moulded articles, rock or porous formations, comprising
wet milling of cement or cement clinker in a nonaqueous solvent to produce a hyperfine cement having a particle size D₅₀ of < 1 µm, and
pumping or infiltrating a slurry of the cement and water into the porous moulded articles, rock or formations.

2. The process according to claim 1, **characterized in that** that the sealing or strengthening is carried out in oilfields or natural gas fields, in particular in porous rock in natural gas reservoirs.

3. The process according to any of claims 1 to 2, **characterized in that** the hyperfine cement additionally comprises at least one cement additive selected from a retarder and a diffusion blocker.

4. The process according to any of claims 1 to 3, **characterized in that** the cement or cement clinker is milled in the presence of a grinding aid.

5. The process according to any of claims 1 to 4, **characterized in that** the nonaqueous solvent and optionally grinding aid are at least partly separated off from the hyperfine cement obtained after milling.

6. The process according to any of claims 1 to 5, **characterized in that** moist hyperfine cement which remains after milling and optional partial removal of the other components is dried to give a free-flowing powder.

7. The process according to any of claims 1 to 6, **characterized in that** the cement is milled in a ball mill or rotational ball mill.

8. The process according to any of claims 1 to 7, **characterized in that** isopropanol is used as nonaqueous solvent.

9. The process according to any of claims 1 to 8, **characterized in that** triethanolamine is used as grinding aid.

10. The process according to any of claims 1 to 9, **characterized in that** the hyperfine cement obtained is mixed in dry form with water to form a low-viscosity slurry.

11. The process according to any of claims 1 to 10, **characterized in that** the cement is portland cement.

## Revendications

1. Procédé d'étanchéification ou de fixation de corps de formage poreux, de roches ou de formations poreuses, comprenant les étapes consistant à broyer par voie humide le ciment ou le clinker de ciment dans un solvant non aqueux pour produire un ciment ultrafin ayant une taille de particules D₅₀ < 1 µm, et à introduire par pompage ou à infiltrer une suspension constituée de ciment et d'eau dans les corps de formage poreux, les roches ou formations poreuses.

2. Procédé selon la revendication 1, **caractérisé en ce que** l'étanchéification ou la fixation s'effectue dans des champs de pétroles ou de gaz naturels, en particulier dans la roche poreuse dans des gisements de gaz naturel.

3. Procédé selon l'une des revendications 1 à 2, **caractérisé en ce que** le ciment ultrafin comprend en plus au moins un additif de ciment choisi parmi un retardateur et un agent bloquant la diffusion.

4. Procédé selon l'une des revendications 1 à 3, **caractérisé en ce que** le ciment ou le clinker de ciment est broyé en présence d'un agent auxiliaire de broyage.

5. Procédé selon l'une des revendications 1 à 4, **caractérisé en ce que** le solvant non aqueux et le cas échéant l'agent auxiliaire de broyage sont séparés au moins partiellement du ciment ultrafin obtenu après broyage.

6. Procédé selon l'une des revendications 1 à 5, **caractérisé en ce que** le ciment ultrafin humide, qui reste après broyage et le cas échéant séparation partielle des autres composants, est séché pour donner une poudre écoulable.

7. Procédé selon l'une des revendications 1 à 6, **caractérisé en ce que** le ciment est broyé dans un broyeur à boulets ou un broyeur à boulets rotatif.

8. Procédé selon l'une des revendications 1 à 7, **caractérisé en ce que** de l'isopropanol est utilisé comme solvant non aqueux.

9. Procédé selon l'une des revendications 1 à 8, **caractérisé en ce que** de la triéthanolamine est utilisée comme agent auxiliaire de broyage.

10. Procédé selon l'une des revendications 1 à 9, **caractérisé en ce que** le ciment ultrafin obtenu est agité sous forme sèche avec de l'eau pour donner une suspension de faible viscosité.

11. Procédé selon l'une des revendications 1 à 10, **caractérisé en ce que** le ciment est le ciment Portland.
